# EUROPEAN PATENT APPLICATION

(11) **EP 0 740 219 A2**
(43) Date of publication of application: **30.10.1996**
(21) Application number: 96106446.6
(22) Date of filing: 24.04.1996
(51) Int. Cl.: G03G 15/08

(54) **Developing unit and toner cartridge**

(30) Priority: 25.04.1995 JP 101507/95
(71) Applicant: MITA INDUSTRIAL CO. LTD., Chuo-ku , Osaka 540 (JP)
(72) Inventor: Okada, Mitsuharu, c/o Mita Industrial Co., Ltd., Osaka 540 (JP)
(74) Representative: Sajda, Wolf E., Dipl.-Phys.

(57) **Abstract**

A developing unit (12) for an imaging device, which includes a toner developing member (33), a toner hopper (34), and a toner cartridge (35). The toner hopper (34) includes a cartridge installation hole (36) into which the toner cartridge (35) may be installed. The toner cartridge (35) includes an inner sleeve member (51) that stores toner in its interior and an outer sleeve member (52) disposed around the outer circumference of the inner sleeve member (51) and capable of relative rotation with it. The inner sleeve member (51) includes a first opening (53) in its surface which faces downward during installation into the imaging device, and the outer sleeve member (52) includes a second opening (54) in its surface which may be aligned with the first opening (53). The toner cartridge (35) may only be removed from the toner hopper (34) when the second opening (54) in the outer sleeve member (52) is rotated 180° with respect to the first opening (53) in the inner sleeve member (51), thereby preventing any inadvertent spillage of toner.

## Description

### BACKGROUND OF THE INVENTION

### 1. Field of the Invention

The present invention relates to electrostatic imaging devices such as copiers, facsimile machines, and laser printers, and more specifically to a cylindrical toner cartridge for installation therein.

### 2. Description of the Related Art

Copiers, facsimile machines, laser printers, and other imaging devices generally involve forming an electrostatic latent image on a photoreceptor drum by exposing the photoreceptor drum to a light source.

These types of imaging devices generally include a developing unit that includes a toner hopper for supplying toner. A detachable toner cartridge is installed in the toner hopper, and when the toner is depleted, the toner is replenished by changing the toner cartridge.

Toner cartridges may be cylindrical in shape. This type of toner cartridge includes a cylindrical member in which the toner is stored, an opening on its peripheral surface through which the toner drops, and a removable sealing film which seals the opening.

This type of cylindrical toner cartridge is installed in the toner hopper by inserting the toner cartridge into the toner hopper with the opening facing upward, peeling off the sealing film from the opening, and then rotating the toner cartridge 180° so that the toner flows out of the opening and into the toner hopper. The toner cartridge may then be rotated again so that any toner remaining in the toner cartridge falls into the toner hopper.

With the conventional structure described above, toner tends to adhere to the sealing film, which can then soil the hands of the user when the sealing film is removed. Toner may also spill out of the toner cartridge and soil the area surrounding the imaging device. In addition, excess toner remaining in the spent cartridge can spill out when the toner cartridge is replaced.

### SUMMARY OF THE INVENTION

It is therefore an object of the present invention to reduce the possibility of toner spills from the toner cartridge.

According to one aspect of the present invention, a developing unit for an imaging device includes a toner developing member, a toner cartridge and a toner hopper. The toner cartridge includes an inner sleeve member which has a first opening therethrough, and an outer sleeve member having a second opening therethrough. The toner hopper supplies toner to the toner developing member and supports the toner cartridge. The outer sleeve member is disposed around the outer circumference of the inner sleeve member and is relatively rotatable with respect to the inner sleeve member. An inner portion of the inner sleeve member is capable of storing toner, and the second opening in the outer sleeve member is alignable with the first opening in the inner sleeve member.

With this type of developing unit, toner from the toner hopper is supplied to the toner developing member, and an electrostatic latent image formed on a photoreceptor is developed by the toner developing member. When the toner has been depleted and the toner cartridge is to be replaced, the outer sleeve member of the empty toner cartridge is rotated so that the first opening is sealed by the outer sleeve member and the cartridge is then removed from the toner hopper. A new toner cartridge is then installed in the toner hopper with the first opening facing downward and with the first opening sealed by the outer sleeve member. The outer sleeve member is then rotated so that the two openings are aligned facing downward. As a result, the toner contained in the inner sleeve member is supplied to the toner hopper.

When the toner cartridge is installed, the first opening is sealed by the outer sleeve member and unsealed by rotating the outer sleeve member. This reduces the likelihood of toner spills relative to the conventional structure, in which the opening is unsealed by peeling off the sealing film. In addition, the first opening is sealed when the toner cartridge is removed, so any toner remaining in the spent cartridge does not spill from the first opening when the toner cartridge is removed. And since the second opening faces upward during removal, any toner adhering to the vicinity of the second opening may not spill out.

According to another aspect of the present invention, the developing unit further includes an inner sleeve rotation restricting member disposed on the toner hopper, and an engaging member disposed on an end surface of the inner sleeve member. Rotation of the inner sleeve member is restricted when the engaging member is engaged with the inner sleeve rotation restricting member.

With this type of developing unit, when the toner cartridge is installed in the toner hopper, the engaging member disposed on the inner sleeve member engages the inner sleeve member rotation preventing member disposed on the toner hopper. Rotation of the inner sleeve member is restricted when the first opening is facing downward, thereby allowing only the outer sleeve member to rotate. Since the inner sleeve can be locked into or released from a position in which rotation is prevented simply by moving the cartridge in the axial direction, the outer sleeve member can be rotated simply and reliably during installation in order to align the two openings.

According to yet another aspect of the present invention, the developing unit further includes a protrusion disposed on a circumferential surface of the outer sleeve member, and an outer sleeve rotation restricting member disposed on the toner hopper. The outer sleeve rotation restricting member engages the protrusion and restricts the rotation of the outer sleeve member to no more than 180° with respect to the inner sleeve member when the inner sleeve rotation restricting member and the engaging member are engaged. The outer sleeve member is integrally rotatable with the inner sleeve member when the inner sleeve rotation restricting member and the engaging member are disengaged and the first and second openings are aligned.

With this type of developing unit, when the inner sleeve member rotation preventing member and the engaging member are engaged, that is, when the cartridge has been inserted completely into the toner supply member, the protrusion disposed on the outer sleeve member engages the outer sleeve member rotation restricting member. Rotation of the outer sleeve member is thereby restricted to no more than 180°, and the two openings may be aligned facing downwards.

Since the outer sleeve member is restricted to 180° of rotation when rotation of the inner sleeve member is restricted, the two openings can be aligned precisely. In addition, since the outer sleeve member is permitted to rotate when the inner sleeve member rotation preventing member and the engaging member are disengaged and the two openings are aligned, the inner sleeve member can be rotated in tandem by rotating the outer sleeve member. Thus, any toner remaining in the interior of the inner sleeve member can reliably dispensed from the toner cartridge.

According to yet another aspect of the present invention, the developing unit further includes a detachment preventing member disposed on the toner hopper. The detachment preventing member engages the protrusion on the outer sleeve member and prevents the outer sleeve member from being removed from the toner hopper when the first and second openings are aligned. Because the first opening is always sealed when the toner cartridge is removed, the possibility of toner spills is reduced.

According to yet another aspect of the present invention, a toner cartridge for a developing unit in an imaging device includes a cylindrical inner sleeve member and a cylindrical outer sleeve member. The cylindrical inner sleeve member has a first opening formed in its surface which faces downward during installation into the developing unit. The cylindrical outer sleeve portion has a second opening formed in its surface that faces upward during installation. The cylindrical outer sleeve member is disposed around the outer circumference of the cylindrical inner sleeve member and is relatively rotatable with it. Toner may be stored in an inner portion of the cylindrical inner sleeve member, and the second opening in the cylindrical outer sleeve member is alignable with the first opening in the cylindrical inner sleeve member.

With this type of toner cartridge, the outer sleeve member is rotated to align the first opening and the second opening during installation, so that the toner contained in the inner sleeve member may flow into the toner hopper. Since the first opening is sealed by the outer sleeve member when the toner cartridge installed and removed, the likelihood of toner spills is reduced relative to the conventional structure, in which the opening is unsealed by peeling off a sealing film. In addition, since the first opening is sealed when the toner cartridge is removed, toner remaining in the spent cartridge does not spill from the first opening when the toner cartridge is removed. Since the second opening faces upwards, any toner adhering to the vicinity of the second opening may not spill out.

According to yet another aspect of the present invention, the cylindrical toner cartridge further includes an inner sleeve rotation restricting member disposed on the developing unit, and an engaging member disposed on an end surface of the cylindrical inner sleeve member. Rotation of the cylindrical inner sleeve member is restricted when the engaging member is engaged with the inner sleeve rotation restricting member.

When this type of toner cartridge is installed into the toner hopper, the engaging member on the inner sleeve member engages the inner sleeve member rotation preventing member on the toner hopper. Rotation of the inner sleeve member is therefore prevented when the first opening is facing downward, and only the outer sleeve member is permitted to rotate. Since the inner sleeve can be locked into or released from a position in which rotation is prevented simply by moving the toner cartridge in the axial direction, the outer sleeve member can be rotated simply and reliably during installation in order to align the two openings.

According to yet another aspect of the present invention, the cylindrical toner cartridge further includes a protrusion disposed on an outer circumference of the cylindrical outer sleeve member, with the protrusion capable of restricting rotation of the cylindrical outer sleeve member within the developing member. The protrusion also prevents the removal of the toner cartridge from the toner hopper when the first and second opening are aligned.

Other objects, features, aspects and advantages of the present invention will be apparent from the following detailed description of the present invention when taken in conjunction with the accompanying drawings, in which like reference numerals designate the same or similar parts throughout.

### BRIEF DESCRIPTION OF THE DRAWINGS

Fig. 1 is an oblique view of the exterior of a facsimile device in accordance with one embodiment of the present invention;
Fig. 2 is a part cross section, part elevation view of the facsimile device depicted in Fig. 1;
Fig. 3 is an oblique, fragmentary view of a toner hopper and toner cartridge used in the facsimile device depicted in Fig. 1;
Fig. 4 is a fragmentary, sectional view of the toner hopper and toner cartridge depicted in Fig. 3;
Fig. 5 is a cross sectional view of the toner hopper depicted in Fig. 3, taken along the line V-V in Fig. 4 looking in the direction of the arrows (with the toner cartridge removed for clarity);
Fig. 6 is a cross sectional view of the toner hopper depicted in Fig. 3, taken along the line VI-VI in Fig. 4 looking in the direction of the arrows (with the toner cartridge removed for clarity);
Fig. 7 is a cross sectional view of the toner hopper shown in Fig. 3, taken along the line VII-VII in Fig. 4 looking in the direction of the arrows (with the toner cartridge removed for clarity);
Fig. 8 is a front view of the toner hopper and toner cartridge depicted in Fig 3;
Fig. 9 is a cross sectional view of the toner cartridge depicted in Fig. 3, showing the inner and outer sleeves of the toner hopper;
Fig. 10 is a part cross section, part elevation of the toner hopper and toner cartridge depicted in Fig. 3, taken along the line X-X in Fig. 4 looking in the direction of the arrows;
Figs. 11(a), 11(b), 11(c), and 11(d) are cross sectional views of the outer and inner sleeve portions of the toner cartridge depicted in Fig 9, showing the positions of a first and second opening and an engaging protrusion during toner cartridge installation.

### DETAILED DESCRIPTION OF THE PREFERRED EMBODIMENTS

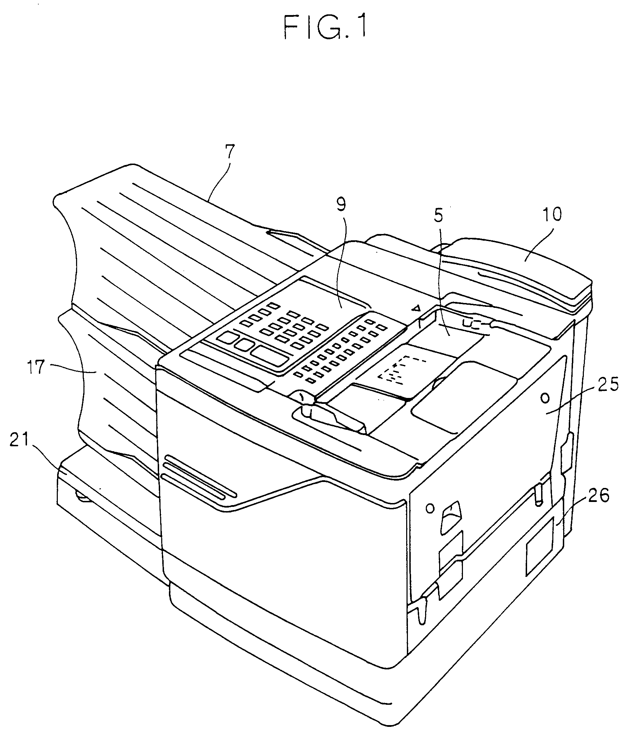

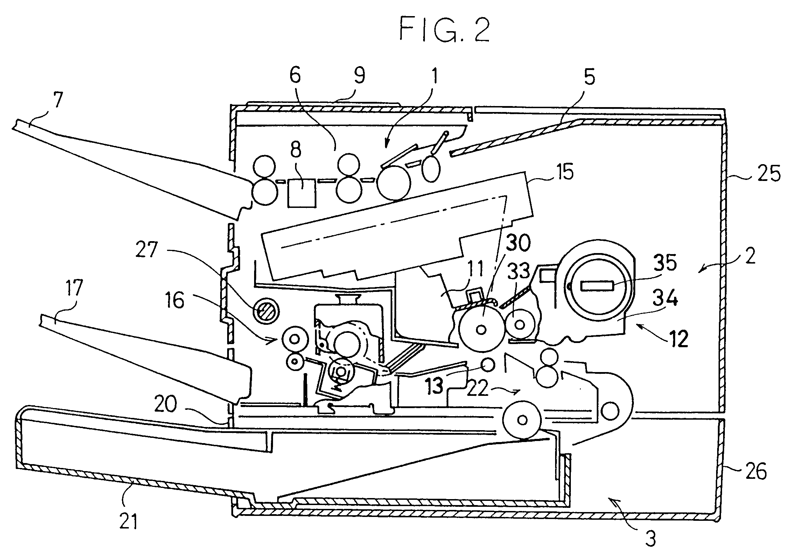

As shown in Figs. 1 and 2, a facsimile machine in accordance with one embodiment of the present invention includes a reader section 1 for reading image data from an original document, an output section 2 for forming received image data onto a paper surface, and a paper feed section 3 for feeding paper to the output section 2. It should be understood that the present invention can be employed in a copier, laser printer, or any other similar type of imaging device.

The reader section 1 includes an original document stand 5 on which an original document is placed, an original document transport section 6 for transporting the original document through the reader section 1, and an original discharge tray 7 for collecting the paper discharged from the original document transport section 6. The original document transport section 6 includes an image data reading sensor 8 for reading image data from an original document. A control panel 9, including various keys and a display for controlling and monitoring the functions of the facsimile machine, as well as a handset 10, are located on the upper portion of the facsimile machine.

The output section 2 includes an aging unit 11 that includes a photoreceptor drum 30, a developing unit 12 for toner development of the electrostatic latent image formed on the photoreceptor drum 30, a transfer roller 13 for transferring the toner image formed on the photoreceptor drum 30 to a paper sheet, a laser device 15 for forming an cage corresponding to received data on the surface of the photoreceptor drum 30 of the imaging unit 11, and a fixing and transport device 16 for fixing the toner image which has been transferred to the paper surface by the transfer roller 13. A paper discharge tray 17 is located downstream from the fixing and transport device 16.

The paper feed section 3 includes a paper cassette 21 that detachably inserts into an opening 20 in the lower section of the main body of the facsimile machine, and a paper feed device 22 that pulls paper sheets from the paper cassette 21 and feeds the paper sheets to the output section 2.

The developing unit 12 includes a magnetic sleeve-type developing roller 33, a toner hopper 34 that supports the developing roller 33, and a toner cartridge 35 that is installed in the toner hopper 34.

The main body of the device is divided into an upper case 25 and a lower case 26. The upper case 25 can be pivoted away from the lower case 26 by a hinge 27. The upper case 25 houses the reader section 1 and the imaging unit 11, the developing unit 12, and the laser device 15. The lower case 26 houses the transport roller 13, the fixing and transport device 16, and the paper feed section 3.

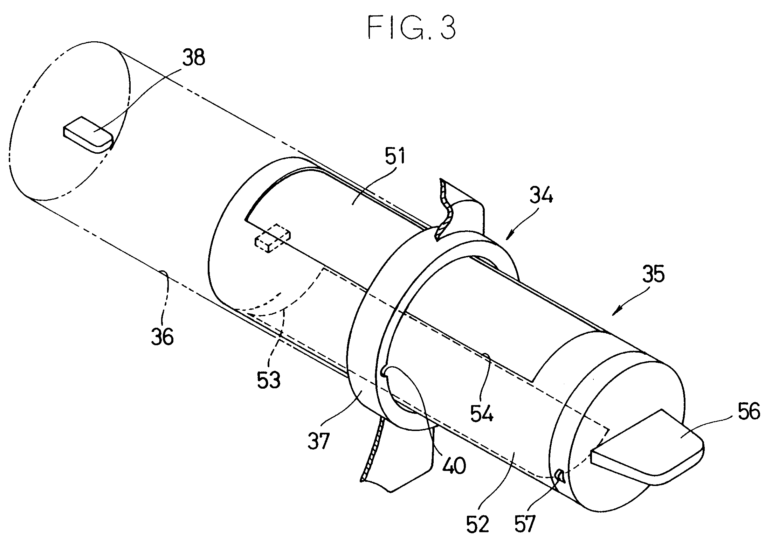

As shown in Fig. 3, the toner hopper 34 includes a cartridge installation hole 36 which supports the toner cartridge 35. The cartridge installation hole 36 is a cylindrical hole sized to conform to the outer diameter of the toner cartridge 35. An annular outer sleeve rotation regulating member 37 is disposed around the entrance of the cartridge installation hole 36 and restricts the rotation of the outer sleeve member of the toner cartridge 35 (described below). An inner sleeve rotation restricting member 38 is disposed in the bottom of the cartridge installation hole 36 and restricts the rotation of the inner sleeve member of the toner cartridge 35, as described below in greater detail.

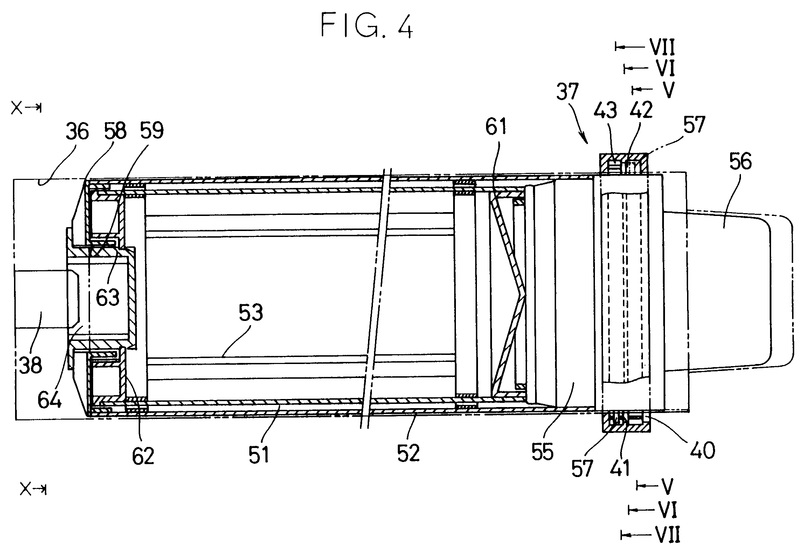

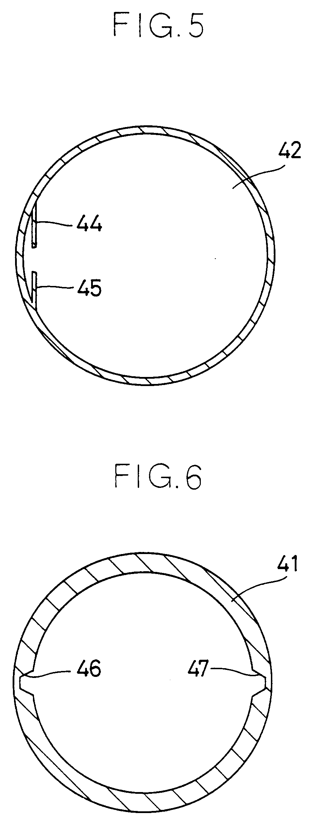

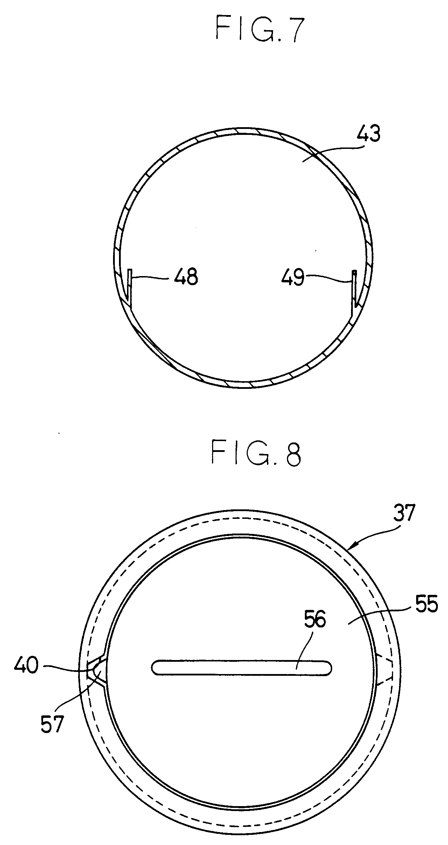

Fig. 4 shows a cross section of a portion of the cartridge installation hole 36 and the toner cartridge 35. As can be seen in Figs. 3, 4, and 8, a first notch 40 is formed on an outer portion of the outer sleeve rotation regulating member 37. As shown in Fig. 4, the interior of the outer sleeve member rotation regulating member 37 is hollow, and is divided into a forward space 42 and a rear space 43 by a partition 41. As shown in Fig. 5, the forward space 42 includes a first barrier 44 and a second barrier 45 that are disposed on the left side thereof and extend in the vertical direction. The gap between the distal end portions of the first and second barriers 44 and 45 is equal to the circumferential width of the first notch 40. As shown in Fig. 6, the partition 41 includes second notch 46 and third notch 47 formed on the left and right sides thereof. Both second and third notches 46 and 47 are shaped identically to the first notch 40. As shown in Fig. 7, the rear space 43 includes third barrier 48 and fourth barrier 49, which are disposed on the left and right sides thereof and extend in the vertical direction.

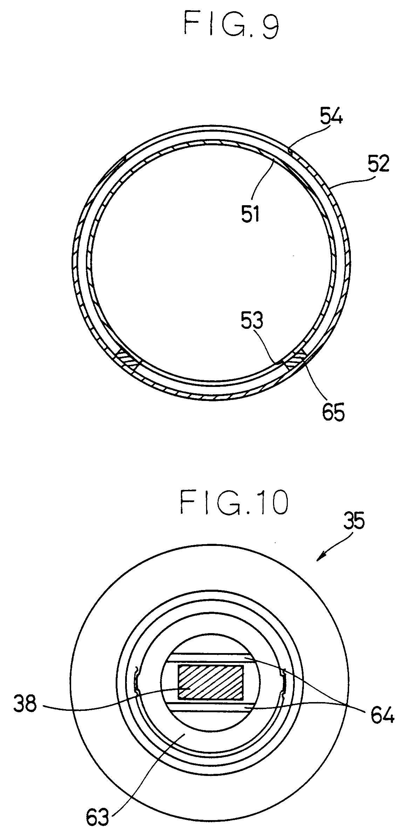

As shown in Figs. 3, 4 and 8 through 10, the toner cartridge 35 includes an inner sleeve member 51 and an outer sleeve member 52. Outer sleeve member 52 is disposed around the outer circumference of the inner sleeve member 51 and is capable of both relative rotation and integral rotation with respect to the inner sleeve member 51.

A first opening 53 is formed in the inner sleeve member 51 and faces downward when the toner cartridge 35 is installed. A second opening 54 is formed in the outer sleeve member 52 and can be aligned with the first opening 53. A first end of the outer sleeve member 52 is sealed by a first lid 55. A tab 56 for rotating outer sleeve member 52 is attached to the front end surface of the first lid 55. An engaging protrusion 57 is attached to an outer circumference of the first lid 55 and is disposed on the left side of the first lid 55 when the second opening 54 is facing upward. The engaging protrusion 57 is shaped to fit into the first, second and third notches 40, 46, and 47. A second end of the outer sleeve member 52 is sealed by a second lid 58. A support hole 59 is formed in the center of the second lid 58 and supports the inner sleeve member 51 so as to allow it to rotate freely.

A first end of the inner sleeve member 51 is sealed by a third lid 61 and a second end thereof is sealed by a fourth lid member 62. The central portion of the fourth lid member 62 includes a ring-shaped support member 63 which protrudes outwards and engages the support hole 59. A pair of engaging plates 64 are disposed on the inside peripheral surface of the support member 63 and include a gap therebetween for engaging the inner sleeve rotation restricting member 38. When the inner sleeve rotation restricting member 38 is inserted between the engaging plates 64, rotation of the inner sleeve member 51 is prevented. A felt sealing member 65 is adhered to the perimeter of the first opening 53 and contacts an inner circumferential surface of the outer sleeve member 52 when the toner cartridge 35 is assembled together. The sealing member 65 prevents the toner contained in the inner sleeve member 51 from spilling into the outer sleeve member 52.

The toner cartridge installation and removal procedures are now described below.

When the toner cartridge 35 is depleted and is to be replaced with a new cartridge, the upper case 25 of the facsimile machine is opened to exposed the developing unit 12. The tab 56 attached on the outer sleeve member 52 is grasped and the outer sleeve member 52 is rotated 180° in the counterclockwise direction (to the position shown in Fig. 8). At this time the inner sleeve rotation restricting member 38 is engaged by the engaging plates 64, and therefore the outer sleeve member 52 rotates with respect to the inner sleeve member 51. Thus the first opening 53, which remains facing downward, is sealed by the outer sleeve member 52 because the second opening 54 is positioned facing upward. The engaging protrusion 57 attached to the first lid 55 of the outer sleeve member 52 moves to the location shown in Fig. 8.

At this point the engaging protrusion 57 is positioned within the rear space 43 and can pass through the first and second barriers 44 and 45 disposed in the forward space 42, through the second notch 46 formed in the partition 41, and through the first notch 40. The empty cartridge 35 can then be pulled out of the cartridge installation hole 36 with the second opening 54 facing upwards. Thus, even if some toner remains in the vicinity of the second opening 54, it will not easily spill out, thus preventing the soiling of the immediate vicinity during the removal of the toner cartridge 35.

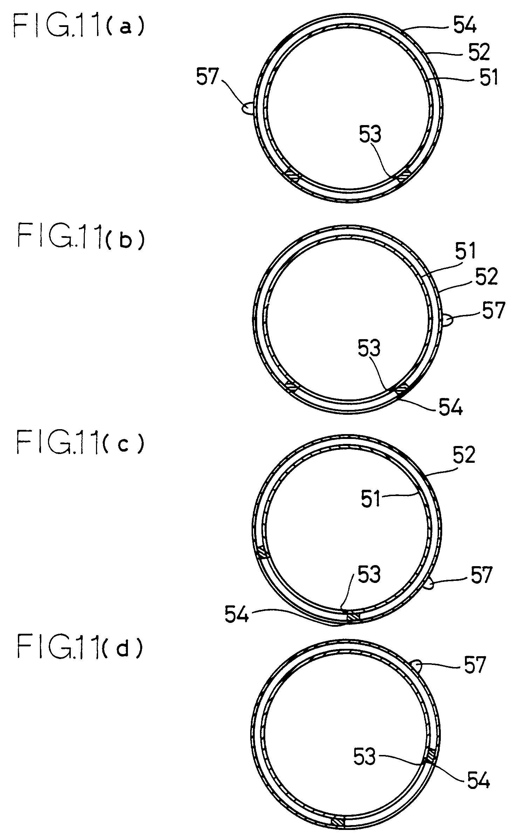

Next, a new toner cartridge 35 is inserted into the cartridge installation hole 36 with the engaging protrusion 57 facing to the left, as shown in Fig. 8. As shown in Fig. 11(a), the second opening 54 faces upward and the first opening 53 faces downward. The engaging protrusion 57 passes through the first notch 40, the first and second barriers 44 and 45, and the second notch 46, and is then positioned within the rear space 43. At this point, the inner sleeve rotation restricting member 38 is engaged with the engaging plates 64 and the rotation of the inner sleeve member 51 is prevented. Third and fourth barriers 48 and 49 allow the outer sleeve member 52 to rotate only 180° due to the presence of the engaging protrusion 57. In other words, when the tab 56 is grasped and rotated, the outer sleeve member 52 rotates by 180° until the engaging protrusion 57 comes into contact with the fourth barrier 49.

As shown in Fig. 11(b), when the outer sleeve member 52 is rotated by 180°, the second opening 54 is aligned with the first opening 53 and the toner contained in the inner sleeve member 51 is supplied to the toner hopper 34. As indicated by the dashed and dotted line in Fig. 4, the tab 56 may then be grasped and pulled slightly forward. The engaging protrusion 57 then passes from the rear space 43 through the fourth notch 47 and enters the front space 42. Since there is no notch on the outer right side of the outer sleeve rotation restricting member 37, the toner cartridge 35 cannot be pulled forward any further. Thus, the toner cartridge 35 cannot be removed from the toner hopper 34 while the first and second openings 53 and 54 are aligned.

As shown in Figs. 11(c) and 11(d), forward space 42 does not have any barriers with which the engaging protrusion 57 can come into contact, and the engaging plates 64 are disengaged from the inner sleeve rotation restricting member 38. Therefore, by grasping the tab 56 and rotating to the left or right, the outer sleeve member 52 and the inner sleeve member 51 may be rotated in tandem, thus allowing any toner remaining in the inner sleeve member to be supplied to the hopper 34.

Since installation and removal of the toner cartridge 35 is impossible unless the second opening 54 of the outer sleeve member 52 is facing upward, the possibility of toner spills is substantially decreased.

Various details of the invention may be changed without departing from its spirit nor its scope. Furthermore, the foregoing description of the embodiments according to the present invention is provided for the purpose of illustration only, and not for the purpose of limiting the invention.

## Claims

1. A developing unit for an imaging device, comprising:
- a toner developing member (33);
- a toner hopper (34) supporting the toner developing member (33); and
- a toner cartridge (35) supported by the toner hopper (34), including an inner sleeve member (51) having a first opening (53) therethrough, and an outer sleeve member (52) having a second opening (54) therethrough, the outer sleeve member (52) disposed around the outer circumference of the inner sleeve member (51);
wherein the outer sleeve member (52) is relatively rotatable with respect to the inner sleeve member (51), and the second opening (54) in the outer sleeve member (52) is alignable with the first opening (53) in the inner sleeve member (51) in response to rotation of the outer sleeve member (52) and the inner sleeve member (51).

2. The developing unit of claim 1,
further comprising an inner sleeve rotation restricting member (38) disposed on the toner hopper (34), and an engaging member (64) disposed on the inner sleeve member (51);
wherein rotation of the inner sleeve member (51) is restricted when the engaging member (57) is engaged with the inner sleeve rotation restricting member (58).

3. The developing unit of claim 2,
further comprising a protrusion (57) disposed on a circumferential surface of the outer sleeve member (52), and an outer sleeve rotation restricting member (37) disposed on the toner hopper (34);
wherein the outer sleeve rotation restricting member (37) engages the protrusion (57) and restricts the rotation of the outer sleeve member (52) to no more than 180° with respect to the inner sleeve member (51) when the inner sleeve rotation restricting member (38) and the engaging member (64) are engaged; and
the outer sleeve member (52) of the toner cartridge (35) is integrally rotatable with the inner sleeve member (51) when the inner sleeve rotation restricting member (38) and the engaging member (64) are disengaged and the first and second openings (53, 54) are aligned.

4. The developing unit of claim 3,
further comprising a detachment preventing member disposed on the toner hopper (34), the detachment preventing member engaging the protrusion (57) on the outer sleeve member (52) and preventing the outer sleeve member (52) from being removed from the toner hopper (34) when the first and second openings (53, 54) are aligned.

5. A toner cartridge (35) for a developing unit (12) in an imaging device, the toner cartridge (35) comprising:
- an inner sleeve member (51) having a first opening (53) therein, and
- an outer sleeve member (52) having a second opening (54) therein, the outer sleeve member (52) disposed around an outer circumference of the inner sleeve member (51) and relatively rotatable therewith;
wherein the second opening (54) in the outer sleeve member (52) is alignable with the first opening (53) in the inner sleeve member (51) after installation into the developing unit (12).

6. The toner cartridge of claim 5,
further comprising an inner sleeve rotation restricting member (38) disposed on the developing unit (12) and an engaging member (64) disposed on an end surface of the inner sleeve member (51), wherein rotation of the inner sleeve member (51) is restricted when the engaging member (64) is engaged with the inner sleeve rotation restricting member (38).

7. The toner cartridge of claim 5 or 6,
further comprising a protrusion (57) disposed on an outer circumference of the outer sleeve member (52).

8. A developing unit (12) in an imaging device, comprising:
- a toner cartridge (35) having an inner sleeve member (51) and an outer sleeve member (52), the inner sleeve member (51) having a first opening (53) disposed in a surface thereof and an engaging member (64) disposed on a surface thereof, the outer sleeve member (52) having a second opening (54) disposed in a surface thereof and a protrusion (57) disposed on a surface thereof, with the inner sleeve member (51) disposed inside the outer sleeve member (52) and rotatable with respect thereto;
- a toner hopper (34) having a toner cartridge installation cylinder (36) for supporting the toner cartridge (35);
- an outer sleeve rotation regulating member (37) attached to the toner hopper (34); and
- an inner sleeve rotation restricting member (38) attached to the toner hopper (34).

9. The developing unit of claim 8,
wherein the outer sleeve rotation regulating member (37) further comprises an annular member disposed around an end of the cartridge installation cylinder (36).

10. The developing unit of claim 8 or 9,
wherein an inner circumference of the outer sleeve rotation regulating member (37) is hollow, and the hollow inner circumference is divided into a first space (42) and a second space (43) by a partition (41).

11. The developing unit of claim 10,
wherein a first notch (40) is formed between a wall dividing the first space (42) from an outer portion of the outer sleeve rotation regulating member (37).

12. The developing unit of claim 10 or 11,
wherein the first space (42) includes a first barrier (44) and a second barrier (45), the second space (43) includes a third barrier (48) and a fourth barrier (49), and the partition (41) includes a second notch (46) and a third notch (47).

13. The developing unit of any of claims 8 to 12,
wherein the inner sleeve rotation restricting member (38) is attached to an inner surface of the toner cartridge installation cylinder (36).

14. The developing unit of any of claims 8 to 13,
wherein rotation of the inner sleeve member (51) is restricted when the inner sleeve rotation restricting member (38) is engaged with the engaging member (64) on the inner sleeve member (51).

15. The developing unit of any of claims 8 to 14,
wherein the inner sleeve rotation restricting member (38) is selectively engageable with the engaging member (64) on the inner sleeve member (51) when the toner cartridge (35) is disposed in the toner hopper (34).

16. The developing unit of any of claims 8 to 15,
wherein axial movement of the toner hopper (34) is restricted with respect to the toner cartridge (35) with the first opening (53) in the inner sleeve member (51) aligned with the second opening (54) in the outer sleeve member (52).

17. The developing unit of any of claims 8 to 16,
wherein the inner sleeve rotation restricting member (38) is engaged with the engaging member (64) on the inner sleeve member (51) when the protrusion (57) on the outer sleeve member (52) is disposed within the second space (43) in the outer sleeve rotation regulating member (37).

18. The developing unit of any of claims 8 to 17,
wherein the inner sleeve rotation restricting member (38) is disengaged from the engaging member (64) on the inner sleeve member (51) when the protrusion (37) on the outer sleeve member (52) is disposed within the first space (42) in the outer sleeve rotation regulating member (37).

19. The developing unit of any of claims 12 to 18,
wherein the third barrier (48) and the fourth barrier (49) in the second space (43) limits rotation of the outer sleeve member (52) to no more than 180° with respect to the inner sleeve member (51) when the protrusion (57) on the outer sleeve member (52) is disposed within the second space (43).

20. The developing unit of any of claims 12 to 19,
wherein the first opening (53) in the inner sleeve member (51) is disposed 180° relative to the second opening (54) in the outer sleeve member (52) when the protrusion (57) on the outer sleeve member (52) is engaged with the third barrier (48) in the second space (43), and the first opening (53) and the second opening (54) are aligned when the protrusion (57) is engaged with the first barrier (44), the second barrier (45) or the fourth barrier (49).
